# EUROPÄISCHE PATENTSCHRIFT

(11) **EP 2 856 622 B1**
(45) Veröffentlichungstag und Bekanntmachung des Hinweises auf die Patenterteilung: **26.10.2016**
(21) Anmeldenummer: 13725663.2
(22) Anmeldetag: 28.05.2013
(51) Int. Cl.: H02K 7/09, H02K 5/15, H02K 15/16, H02K 15/02, H02K 5/16

(54) **LAGERSCHILD FÜR EINE ELEKTRISCHE MASCHINE, ELEKTRISCHEN MASCHINE UND VERFAHREN ZUM ZUSAMMENBAUEN EINER ELEKTRISCHEN MASCHINE**
END PLATE FOR AN ELECTRIC MACHINE, ELECTRIC MACHINE AND METHOD FOR ASSEMBLING AN ELECTRIC MACHINE
FLASQUE POUR MACHINE ÉLECTRIQUE, MACHINE ÉLECTRIQUE ET PROCÉDÉ DE MONTAGE D'UNE MACHINE ÉLECTRIQUE

(30) Priorität: 31.05.2012 DE 102012209134
(43) Veröffentlichungstag der Anmeldung: 08.04.2015
(73) Patentinhaber: MAN Diesel & Turbo SE, 86153 Augsburg (DE)
(72) Erfinder: KABS, Gino, CH-8903 Landikon (CH); KLEYNHANS, Georg, CH-8180 Bülach (CH); DETTWYLER, Markus, CH-8330 Pfäffikon (CH); VETTER, Marcel, CH-8057 Zürich (CH)
(86) Internationale Anmeldenummer: PCT/EP2013/060971
(87) Internationale Veröffentlichungsnummer: WO 2013/178634

(56) Entgegenhaltungen:
- EP-A1- 0 412 954
- DE-A1-102009 019 593
- DE-B- 1 125 066
- JP-A- 2007 325 336
- Zhemin Cai ET AL: "EFFECTS OF CONSTANT UNBALANCED MAGNETIC PULL TO THE VIBRATION BEHAVIOURS OF TURBOMACHINERY" In: 1. Juli 2008 (2008-07-01), XP055140074, in der Anmeldung erwähnt Zusammenfassung

## Beschreibung

Die Erfindung betrifft ein Lagerschild für eine elektrische Maschine, eine mit einem solchen Lagerschild ausgerüstete elektrische Maschine und ein Verfahren zum Zusammenbauen der elektrischen Maschine.

Aus DE 10 2009 001 948 A1 ist ein Lagerschild für eine elektrische Maschine bekannt, welches einen Innenring als eine Lageraufnahme, in der ein zur drehbaren Lagerung eines Rotors der elektrischen Maschine eingerichtetes Lager aufnehmbar ist, und einen Außenring als eine radial auswärts weisende Außenumfangskontur aufweist, die zur radialen Abstützung des Lagerschildes unter Vorspannung in einen Innenumfang eines Statorgehäuses der elektrischen Maschine einpassbar ist.

Aus DE 10 2009 019 593 A1 ist entnehmbar eine elektrische Maschine mit einem ein Statorgehäuse aufweisenden Stator, einem in einem Innenumfang des Statorgehäuses angeordneten Rotor und einem Lagerschild, in dem ein Lager zur drehbaren Lagerung des Rotors in einer Lageraufnahme aufgenommen ist. An dem Lagerschild ist ein aktives Magnetlager vorgesehen, über das bei bestromtem Magnetlager eine Rotorwelle des Rotors drehbar radial gelagert ist. Ein Fanglager des aktiven Magnetlagers weist einen Innenring auf, der die Rotorwelle umschließt und der einen Innendurchmesser hat, welcher um ein vorbestimmtes Maß größer als ein Außendurchmesser der Rotorwelle ist, so dass bei bestromtem Magnetlager ein Ringspalt zwischen Rotorwelle und Innenring gebildet ist und bei unbestromtem Magnetlager die Rotorwelle innen auf dem Innenring aufliegt.

Die Wicklung einer elektrischen Maschine, wie eines Elektromotors, erzeugt naturgemäß Kräfte, welche im Idealfall im Wesentlichen vollständig in an einem Abtrieb (z.B. einer Kupplung) der elektrischen Maschine nutzbares Drehmoment am Rotor umgesetzt werden. Im Realfall wirken jedoch auch Störkräfte auf den Rotor, welche dessen optimale Rotation beeinträchtigen können. Diese Störkräfte können hervorgerufen werden, wenn einzelne Wicklungsstränge leicht unterschiedliche elektrische Eigenschaften aufweisen, die Blechung lokale Variationen aufweist und/oder der Rotor nicht genau zentrisch im Stator rotiert. Letzteres kann sich darin manifestieren, dass periodische Kraftanregungen mit einem Vielfachen der elektrischen Frequenz auf den Rotor einwirken. In der Fachliteratur ist dieses Phänomen bekannt unter "Unbalanced Magnetic Pull" (UPM).

Untersuchungen zu diesem Phänomen sind z.B. veröffentlicht in "EFFECTS OF CONSTANT UNBALANCED MAGNETIC PULL TO THE VIBRATION BEHAVIOURS OF TURBOMACHINERY", Zhemin Cai und Ningsheng Feng, ICSV15, 15th International Congress on Sound and Vibration, 6-10 Juli 2008, Daejeon, Korea sowie in "Simulation of the effects of the unbalanced magnetic pull in four-poles slim generators", P. Pennacchi und L. Frosini.

Das o.g. Phänomen verursacht unerwünschte Vibrationen in der Rotorwelle (Rotordynamik) und damit potentiell in der ganzen elektrischen Maschine. Dies kann bei Hochfrequenzmotoren mit kleinen Luftspalten in der elektrischen Maschine ein ernsthaftes Problem darstellen.

In Bezug auf die vorgenannten Probleme, sind aus dem Stand der Technik des Weiteren noch die Dokumente DE 11 25 066 B und EP 0 412 954 A1 bekannt.

Aus der DE 11 25 066 B ist zunächst ein Lagerschild für eine elektrische Maschine mit einer Lageraufnahme bekannt, in der ein zur drehbaren Lagerung eines Rotors der elektrischen Maschine eingerichtetes Lager aufnehmbar ist und das weiter eine radial äußere Umfangskontur umfasst, an der eine Anzahl von mindestens drei Stützelementen vorgesehen sind, die jeweils um ein bestimmtes Vorstehmaß gegenüber der Umfangskontur nach radial außen vorstehen, so dass sie eine diskontinuierliche Außenumfangskontur des Lagerschilds definieren. Dabei sind die jeweiligen Vorstehmaße der Stützelemente so bemessen, das das Lagerschild unter Erzielung von Koinzidenz eines Zentrums des Lagers mit einer geometrischen Längsachse der elektrischen Maschine und/oder magnetischen Längsachse der elektrischen Maschine einpassbar sind. Allerdings kann diese Anordnung nicht die bereits genannten Probleme verhindern.

Aus der EP 0 412 954 A1 ist weiterhin ein Lagerschild für Elektromotoren mit einem äußeren Ring für den Einpass des Stators und einem mit dem äußeren Ring über Stege verbundenen inneren Ring bekannt, wobei der innere Ring den Sitz für das Lager des Rotors des Elektromotors bildet. Auch diese Anordnung kann die genannten Probleme nicht verhindern.

Der Erfindung liegt die Aufgabe zugrunde, ein Lagerschild für eine elektrische Maschine, eine elektrische Maschine und ein Verfahren zum Zusammenbauen einer elektrischen Maschine bereitzustellen, so dass unerwünschte Exzentrizitäten des Rotors und damit Vibrationen vermieden werden können.

Dies wird nach einem ersten Aspekt der Erfindung mit einem Lagerschild gemäß Anspruch 1, einer elektrischen Maschine gemäß Anspruch 7 bzw. einem Verfahren gemäß Anspruch 10 erreicht.

Es ist eine Erkenntnis der Erfindung, dass man, um UPM-basierte Vibrationen des Rotors zu vermeiden, danach streben sollte, den Rotor möglichst zentrisch zum Stator anzuordnen. Hierbei ist die Zentrizität bezüglich der magnetischen Zentralachse bzw. Längsachse der elektrischen Maschine und/oder der geometrischen Zentralachse bzw. Längsachse der elektrischen Maschine maßgeblich. Die magnetische Längsachse und die geometrische Längsachse können zusammenfallen, dieselben müssen aber nicht zusammenfallen.

Da man grundsätzlich mit Produktions- und Montagetoleranzen zu rechnen hat, lässt sich in der Realität nicht verhindern, dass das Zentrum eines den Rotor lagernden im Lagerschild aufgenommenen Magnetlagers nicht genau mit der magnetischen Längsachse einer Statorwicklung des Stators zusammenfällt. Da diese magnetische Längsachse der Statorwicklung in erster Näherung im Wesentlichen mit einer Längsmittelachse eines Innenumfangs bzw. Innendurchmessers eines Statorgehäuses der elektrischen Maschine und damit der geometrischen Längsachse der elektrischen Maschine übereinstimmt bzw. koinzidiert, ist es somit vorteilhaft, das Zentrum des Magnetlagers in erster Linie am Innenumfang des Statorgehäuses bzw. der geometrischen Längsachse der elektrischen Maschine auszurichten. Im Idealfall erfolgt jedoch diese Ausrichtung bezüglich der magnetischen Längsachse der elektrischen Maschine.

Gemäß der Erfindung weist daher der Lagerschild für die elektrische Maschine, wie insbesondere einen Elektromotor oder einen Elektrogenerator, zumindest folgende Elemente auf: eine Lageraufnahme, in der ein zur drehbaren Lagerung eines Rotors der elektrischen Maschine eingerichtetes Magnetlager, welches bevorzugt als aktives Magnetlager mit dazugehörendem Fanglager ausgebildet ist, aufnehmbar ist; eine radial auswärts weisende Umfangskontur, an der eine Anzahl von mindestens drei Stützelementen - auch Shimming Pads genannt - vorgesehen sind, die jeweils um ein bestimmtes Vorstehmaß radial über die Umfangskontur hinaus vorstehen, so dass sie eine diskontinuierliche Außenumfangskontur des Lagerschildes definieren; wobei die jeweiligen Vorstehmaße der Stützelemente so bemessen sind, dass das Lagerschild unter Erzielung von Koinzidenz eines Zentrums des Magnetlagers mit einer geometrischen Längsachse der elektrischen Maschine und/oder einer magnetischen Längsachse der elektrischen Maschine einpassbar ist.

Durch die gezielte Beeinflussung bzw. Anpassung der jeweiligen Vorstehmaße lassen sich Produktions- und Montagetoleranzen ausgleichen. Dadurch, dass nach Einpassen der Außenumfangskontur das Zentrum des Magnetlagers koinzident mit der geometrischen Längsachse und/oder magnetischen Längsachse des Stators der elektrischen Maschine ist, ist folglich der Rotor optimal zentrisch zum Statorgehäuse angeordnet, wodurch periodische Kraftanregungen und damit einhergehende, unerwünschte Vibrationen des Rotors weitestgehend reduziert bzw. vermieden werden können.

Gemäß einer bevorzugten Ausführungsform des erfindungsgemäßen Lagerschildes sind die Stützelemente jeweils radial verstellbar an die Umfangskontur montiert, so dass die jeweiligen Vorstehmaße der Stützelemente veränderbar, d.h. immer wieder gezielt beeinflussbar bzw. anpassbar, sind. Eine solche radiale Verstellung kann z.B. mit einer gewindegesteuerten selbsthemmenden und/oder separat festlegbaren Gleitführung oder mit auswechselbaren Beilagen bzw. Unterlagen realisiert sein.

Gemäß einer weiteren bevorzugten Ausführungsform des erfindungsgemäßen Lagerschildes weist jedes Stützelement einen radial außenliegenden Anlagekörper zur Anlage am Innenumfang des Statorgehäuses und eine individuelle Anzahl von dem Anlagekörper radial nach innen unterlegten Beilagen - bevorzugt in Form von dünnen Platten - auf, wobei jede Beilage eine bestimmte radiale Dickenabmessung aufweist. Dem Anlagekörper können eine Beilage oder auch mehrere Beilagen gleicher oder unterschiedlicher radialer Dickenabmessung unterlegt sein. Diese Ausgestaltung der Erfindung ist besonders robust und lässt sich einfach und kostengünstig realisieren.

Gemäß noch einer bevorzugten Ausführungsform des erfindungsgemäßen Lagerschildes sind die Stützelemente in jeweiligen Ausnehmungen angeordnet, welche sich jeweils von der Umfangskontur aus radial nach innen sowie umfänglich des Lagerschildes erstrecken. In den Ausnehmungen lassen sich vorteilhaft Befestigungsmittel - z.B. die Schraubenköpfe von Schrauben - unterbringen, so dass diese radial keinen zusätzlichen Platz beanspruchen.

Gemäß noch einer weiteren Ausführungsform des erfindungsgemäßen Lagerschildes sind die Stützelemente in zwei Gruppen von Stützelementen um die Umfangskontur herum verteilt angeordnet, wobei die Stützelemente einer ersten Gruppe dieser beiden Gruppen mit dem Innenumfang des Statorgehäuses im Eingriff sind, um das Lagerschild gegenüber dem Statorgehäuse einzupassen, und wobei die Stützelemente einer zweiten Gruppe dieser beiden Gruppen mit dem Innenumfang eines Anschlussgehäuses im Eingriff sind, um das Anschlussgehäuse unabhängig vom Lagerschild gegenüber dem Statorgehäuse einzupassen. Vorzugsweise weisen hierzu die Stützelemente jeweils eine radial außenliegende Stützfläche auf, die axial zum Lagerschild gestuft ausgebildet ist, wobei die Stufung einer ersten Gruppe mit mindestens drei Stützelementen in eine erste Axialrichtung radial bis auf das jeweilige Vorstehmaß ansteigt und die Stufung einer zweiten Gruppe mit mindestens drei Stützelementen in eine zweite Axialrichtung radial bis auf das jeweilige Vorstehmaß ansteigt, und wobei innerhalb jeder der beiden Gruppen die Stützelemente mit einem definierten Winkelabstand voneinander vorzugsweise symmetrisch um die Umfangskontur herum verteilt angeordnet sind. Dies Ausgestaltung ist für elektrische Maschinen vorteilhaft, bei welchen am Statorgehäuse ein Anschlussgehäuse angeflanscht ist.

Durch die entgegengesetzte Stufung der beiden Gruppen kommen bevorzugt bei Montage des Lagerschildes zuerst die Stützflächen von einer der beiden Gruppen in Kontakt mit dem Innenumfang des Statorgehäuses, so dass eine ggf. nötige Anpassung der Vorstehmaße dieser Gruppe durchgeführt werden kann. Die Stützflächen der anderen der beiden Gruppen kommen durch die entgegengesetzte Stufung erst bei der weiterem Montage des Anschlussgehäuses in Kontakt mit dem Innenumfang des Anschlussgehäuses. Da die Vorstehmaße der ersten Gruppe angepasst sind, liefert diese die gewünschte Zentrierung des Lagerschilds, so dass die Vorstehmaße der zweiten Gruppe zur Zentrierung des Anschlussgehäuses unabhängig von der Zentrierung des Lagerschilds genutzt werden können.

Gemäß dem ersten Aspekt der Erfindung wird weiterhin eine elektrische Maschine gemäß Anspruch 7 bereitgestellt, wie insbesondere eine als Elektromotor oder als Elektrogenerator ausgeführte elektrische Maschine, die einen ein Statorgehäuse aufweisenden Stator, einen in einem Innenumfang des Statorgehäuses angeordneten Rotor und ein Lagerschild gemäß dem ersten Aspekt der Erfindung nach Anspruch 1 aufweist. Details des Lagerschilds gemäß dem ersten Aspekt der Erfindung sind oben beschrieben.

Gemäß einer Ausführungsform der erfindungsgemäßen elektrischen Maschine erfolgt die radiale Lagerung des Rotors über beidseitig an der elektrischen Maschine angeordnete Magnetlager, welche jeweils über ein erfindungsgemäßes Lagerschild in die elektrische Maschine eingebunden sind.

Bei den Magnetlagern kann es sich um passive Magnetlager und um aktive Magnetlager handeln.

Für den Fall eines Ausfalls eines Magnetlagersystems mit aktiven Magnetlagern sind Fanglager vorgesehen, die den Rotor auffangen.

Magnetlager und Fanglager solcher aktiven Magnetlager sind in der Regel als vormontierte Einheit verfügbar.

Als Fanglager kommen vorzugsweise Rollenlager zur Anwendung. Es sind aber auch Gleitlager als Fanglager einsetzbar.

Die Fanglager sollen, falls diese als Rollenlager ausgeführt sind, im Normalbetrieb nicht mitdrehen. Daher gibt es zwischen deren Innenring und dem schnelldrehenden Rotor einen Luftspalt von wenigen Zehntel-Millimetern. Bei diesem Luftspalt handelt es sich um den engsten Spalt der ganzen Rotorwelle, da im Falle eines Rotorabsturzes verhindert werden soll, dass der Rotor in andere Strukturen fällt als in die Fanglager. Die Magnetlager halten daher im Normalbetrieb den Rotor im Zentrum dieser Fanglager.

Gemäß einer bevorzugten Ausführungsform der erfindungsgemäßen elektrischen Maschine ist an dem Lagerschild ein aktives Magnetlager vorgesehen, über das bei Bestromung des Magnetlagers eine Rotorwelle des Rotors drehbar radial gelagert ist, wobei das Fanglager des aktiven Magnetlagers einen Innenring aufweist, der die Rotorwelle umschließt und der einen Innendurchmesser hat, welcher um ein vorbestimmtes Maß größer als ein Außendurchmesser der Rotorwelle ist, so dass bei bestromtem Magnetlager ein Ringspalt zwischen Rotorwelle und Innenring des Fanglagers gebildet ist und bei unbestromtem Magnetlager die Rotorwelle innen auf dem Innenring des Fanglagers aufliegt.

Gemäß einer weiteren bevorzugten Ausführungsform der erfindungsgemäßen elektrischen Maschine weist diese außerdem eine Steuervorrichtung auf zum elektrischen Ansteuern des aktiven Magnetlagers, so dass bei bestromtem Magnetlager eine Rotationsachse der Rotorwelle koinzident mit dem Zentrum des Magnetlagers ist.

Da wie oben erwähnt grundsätzlich mit Produktions- und Montagetoleranzen zu rechnen ist, lässt sich in der Realität nicht verhindern, dass das Zentrum der Magnetlager und im Falle aktiver Magnetlager mit einer vormontierten Einheit aus Magnetlager und Fanglager auch die Fanglager nicht genau mit der magnetischen Zentralachse bzw. Längsachse der Statorwicklung zusammenfällt. Ein Versatz (Deachsierung) führt jedoch, wie oben geschildert, zu dem unerwünschten Phänomen von durch UPM verursachten periodischen Krafteinwirkungen auf den Rotor. Abhilfe schafft das erfindungsgemäße radial justierbare bzw. verstellbare Lagerschild, wobei die Justierung bzw. Verstellung bevorzugt während des Montageprozesses durch genaues Ausmessen realisiert wird. Das Zentrum der Magnetlager und im Falle von aktiven Magnetlagern auch der Fanglager wird dabei mit dem Zentrum der Statorwicklung adjustiert, was in erster Näherung über die Ausrichtung am Innenumfang bzw. Innendurchmesser des Statorgehäuses bzw. der geometrischen Längsachse des Stators, vorzugsweise an der magnetischen Längsachse des Stators, gefolgt.

Erfindungsgemäß wird weiterhin ein Verfahren zum Zusammenbauen der erfindungsgemäßen elektrischen Maschine bereitgestellt, wobei das Verfahren die Schritte aufweist: Einsetzen des Rotors in das Statorgehäuse; Einpassen der Außenumfangskontur des Lagerschildes in den Innenumfang des Statorgehäuses, so dass das Magnetlager und der Innenring des Radiallagers die Rotorwelle jeweils umschließen; Betreiben der elektrischen Maschine, so dass deren Rotor bei bestromtem Magnetlager rotiert; Bestimmen eines Schwingungsverhaltens des Rotors, Bestimmen eines Korrketur-Versatzes aus dem Schwingungsverhalten, Verändern der jeweiligen Vorstehmaße der Stützelemente auf Basis des Korrketur-Versatzes. Die Veränderung der jeweiligen Vorstehmaße erfolgt dabei derart, dass das Schwingungsverhalten der elektrischen Maschine optimiert wird. Dies erfolgt durch die Koinzidierung zwischen der Rotationsachse der Rotorwelle der elektrischen Maschine und der geometrischen Längsachse und/oder der magnetischen Längsachse des Stators der elektrischen Maschine.

Durch das erfindungsgemäße Verfahren wird insbesondere die Möglichkeit genutzt, Feinjustierungen des Rotors zur magnetischen Zentralachse bzw. Längsachse der Statorwicklung auf Basis eines erzielten Betriebsverhaltens bzw. Schwingungsverhaltens zu realisieren, womit elektrische Asymmetrien korrigiert werden können. Das Bestimmen des Korrketur-Versatzes der Rotationsachse der Rotorwelle gegenüber der Zentralachse der Statorwicklung des Stators und das entsprechende Verändern der jeweiligen Vorstehmaße der Stützelemente erfolgen entweder durch Tests bzw. mehrere Montage-und-Mess-Iterationen oder rechnerisch auf Basis eines erzielten Betriebsverhaltens.

Die Erfindung erstreckt sich ausdrücklich auch auf solche Ausführungsformen, welche nicht durch Merkmalskombinationen aus expliziten Rückbezügen der Ansprüche gegeben sind, womit die offenbarten Merkmale der Erfindung - soweit dies technisch sinnvoll ist - beliebig miteinander kombiniert sein können.

Eine erfindungsgemäße elektrische Maschine nach einem zweiten Aspekt der Erfindung ist in Anspruch 10 definiert. Hiernach sind die Stützelementen bzw. Shimming Pads nicht im Lagerschild sondern im Statorgehäuse und/oder im Anschlussgehäuse aufgenommen und liegen am Lagerschild an.

Im Folgenden wird die Erfindung anhand einer bevorzugten Ausführungsform und unter Bezugnahme auf die beigefügten Figuren detaillierter beschrieben.
- Fig.1: zeigt eine perspektivische Ansicht eines Stators einer elektrischen Maschine gemäß einer Ausführungsform der Erfindung nach dem ersten Aspekt der Erfindung.
- Fig.2: zeigt eine perspektivische Explosionsansicht der elektrischen Maschine der Fig. 1.
- Fig.3: zeigt eine perspektivische Ansicht eines Lagerschildes der elektrischen Maschine der Fig. 1.
- Fig.4: zeigt eine Ansicht in Axialrichtung des Lagerschildes von Fig.3.
- Fig.5: zeigt in einer oberen Hälfte eine perspektivische Ansicht eines zu einer Gruppe gehörenden Stützelements des Lagerschildes von Fig.3 sowie in einer unteren Hälfte eine entlang einer Linie A-A in Fig.4 gesehene Schnittansicht eines Teils des Lagerschildes.
- Fig.6: zeigt in einer oberen Hälfte eine perspektivische Ansicht eines zu einer weiteren Gruppe gehörenden Stützelements des Lagerschildes von Fig.3 sowie in einer unteren Hälfte eine entlang einer Linie B-B in Fig.4 gesehene Schnittansicht eines Teils des Lagerschildes.
- Fig.7: zeigt eine vergrößerte Ansicht eines Bereichs C von Fig.4.
- Fig. 8: zeigt Alternativen zu den Stützelementen der Fig. 5 und 6.
- Fig. 9: zeigt schematisierte, ausschnittweise Querschnitte aus einer elektrischen Maschine nach dem zweiten Aspekt der Erfindung.

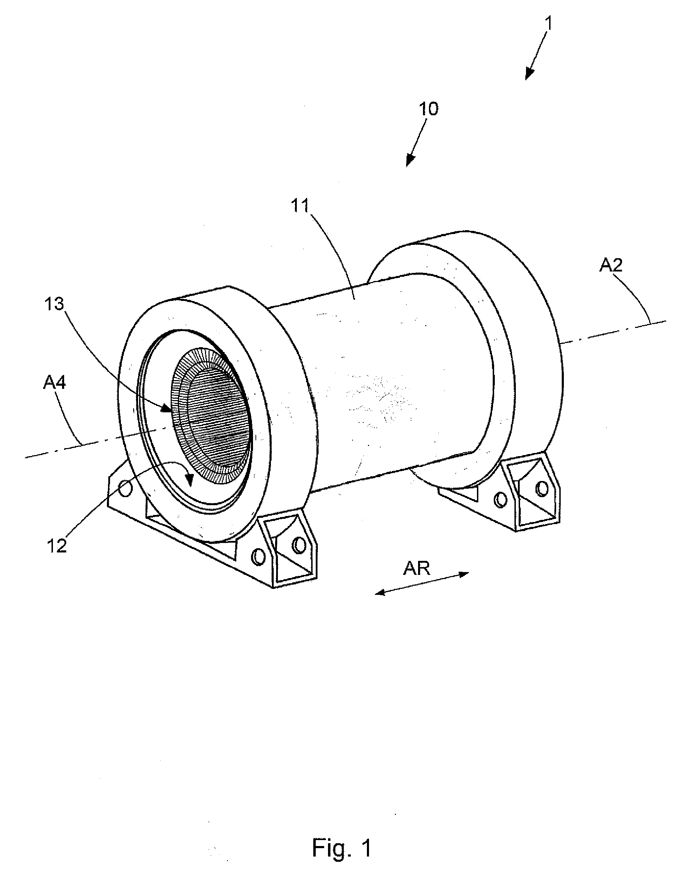

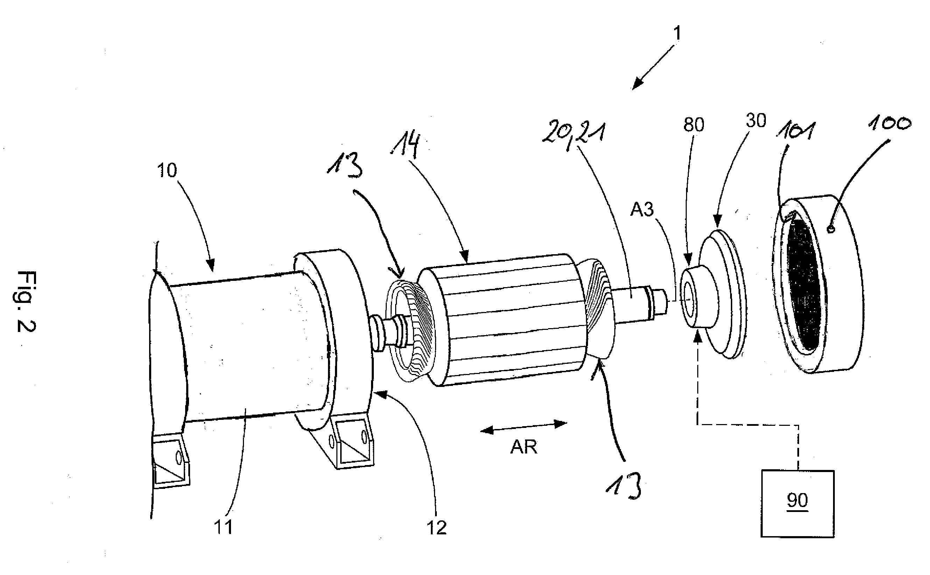

Fig.1 und Fig.2 zeigen eine elektrische Maschine 1 gemäß einer Ausführungsform der Erfindung. Die elektrische Maschine 1 ist bevorzugt als Elektromotor oder als Elektrogenerator ausgebildet.

Die elektrische Maschine 1 ist versehen mit einem ein Statorgehäuse 11 und ein Statorblechpaket 14 aufweisenden Stator 10, einem in einem Innenumfang 12 des Statorgehäuses 11 angeordneten Rotor 20 mit einer Rotorwelle 21 und an jedem von zwei Enden in einer Axialrichtung AR der elektrischen Maschine 1 jeweils einem Lagerschild 30, wobei in Fig.2 ist nur ein Lagerschild 30 sichtbar ist.

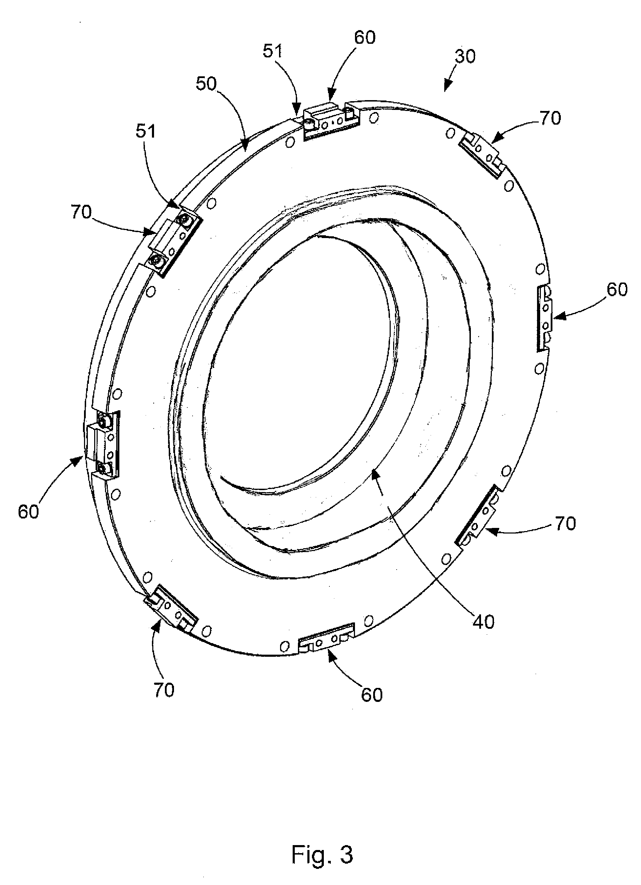

Wie zusätzlich aus den Figuren 3 bis 7 entnehmbar, weist jedes Lagerschild 30 eine Lageraufnahme 40 sowie eine radial auswärts weisende Umfangskontur 50 auf.

In der Lageraufnahme 40 des Lagerschildes 30 ist ein zur drehbaren Lagerung des Rotors 20 eingerichtetes Lager in Form eines Magnetlagers 80 aufgenommen. Bei Magnetlager 80 kann es sich um ein passives Magnetlager und um ein aktives Magnetlager handeln. Vorzugsweise findet ein aktives Magnetlager 80 Anwendung.

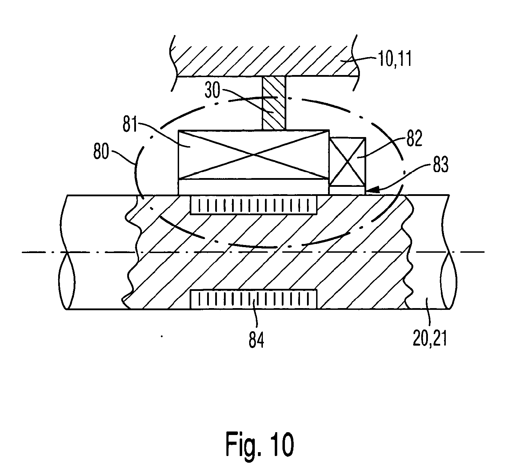

Fig.10 zeigt einen schematisierten Querschnitt durch eine elektrische Maschine 1 im Bereich eines aktiven Magnetlagers 80. Das aktive Magnetlager 80 verfügt neben dem aktiven, statorseitigen Teil 81 des Magnetlagers 80, welches mit einem rotorseitigen Blechpaket 84 des Magnetlagers 80 zusammenwirkt, über ein statorseitiges Fanglager 82, um für den Fall eines Ausfalls des Magnetlagers den Rotor 20 auffangen. Das Fanglager 82 kann als Rollenlager oder Gleitlager ausgebildet sein.

Mit der Bezugsziffer 83 ist ein Spalt im Bereich des Fanglagers 82 gekennzeichnet, welcher das kleinste Radialspiel des Magnetlagers 80 bestimmt.

Das aktive Magnetlager 80 wird elektrisch durch eine bevorzugt elektronische Steuervorrichtung 90 angesteuert.

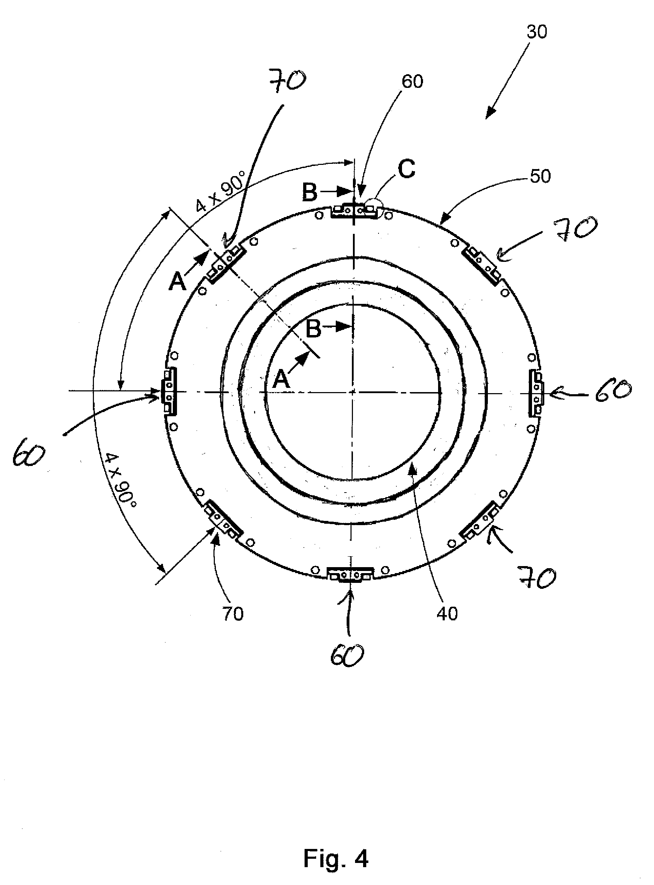

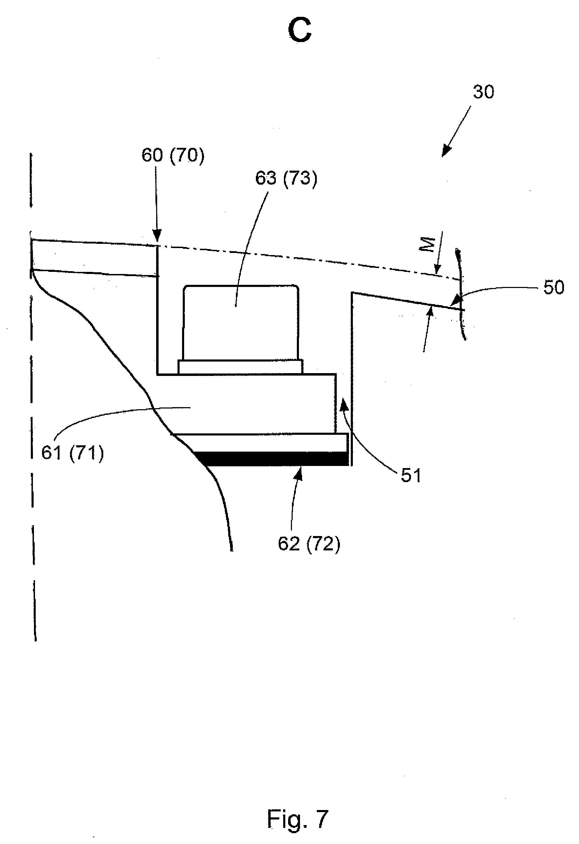

An der Umfangskontur 50 sind eine Anzahl von mindestens drei - in der gezeigten Ausführungsform zwei Gruppen von jeweils vier Stützelementen 60, 70 - vorgesehen, die jeweils um ein bestimmtes Vorstehmaß M (siehe Fig.7) radial über die Umfangskontur 50 hinaus vorstehen, so dass sie eine diskontinuierliche Außenumfangskontur des Lagerschildes 30 definieren. Wie aus Fig.4 ersichtlich, sind die Stützelemente 60, 70 in der gezeigten Ausführungsform mit einem jeweiligen Winkelabstand von 45 Grad zueinander symmetrisch um die Umfangskontur 50 herum verteilt angeordnet.

Die jeweiligen Vorstehmaße M der Stützelemente 60, 70 sind so bemessen, dass die von ihnen gebildete Außenumfangskontur zur radialen Abstützung des Lagerschildes 30 unter Erzielung von Koinzidenz eines Zentrums des Magnetlagers 80 mit einer geometrischen Längsachse A2 des Stators 10 der elektrischen Maschine 1 und/oder einer magnetischen Längsachse A4 des Stators 10 der elektrischen Maschine 1 einpassbar bzw. eingepasst ist.

Das Fanglager eines aktiven Magnetlagers 80 weist einen Innenring auf, der die Rotorwelle 21 umschließt und der einen Innendurchmesser hat, welcher um ein vorbestimmtes Maß größer als ein Außendurchmesser der Rotorwelle 21 ist, so dass bei bestromtem Magnetlager 80 der Ringspalt 83 zwischen Rotorwelle 21 und Innenring gebildet ist und bei unbestromtem Magnetlager 80 die Rotorwelle 21 innen auf dem Innenring aufliegt.

Die Steuervorrichtung 90 steuert ein aktives Magnetlager 80 so an, dass bei bestromtem Magnetlager 80 eine Rotationsachse A3 der Rotorwelle 21 koinzident mit der Rotationsachse des Magnetlagers und indirekt des Fanglagers ist.

Die Stützelemente 60, 70 sind jeweils radial verstellbar an die Umfangskontur 50 montiert, so dass die jeweiligen Vorstehmaße M der Stützelemente 60, 70 zur Erzielung der Koinzidenz des Zentrums des Magnetlagers 80 mit der geometrischen Längsachse A2 und/oder der magnetischen Längsachse A4 des Stators 10 der elektrischen Maschine 1 veränderbar sind.

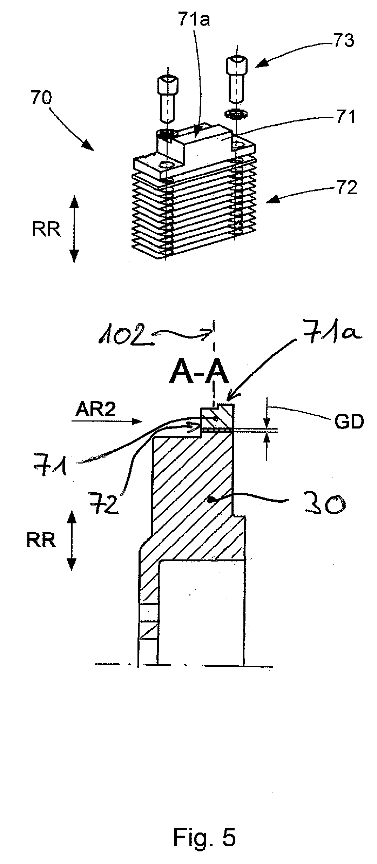

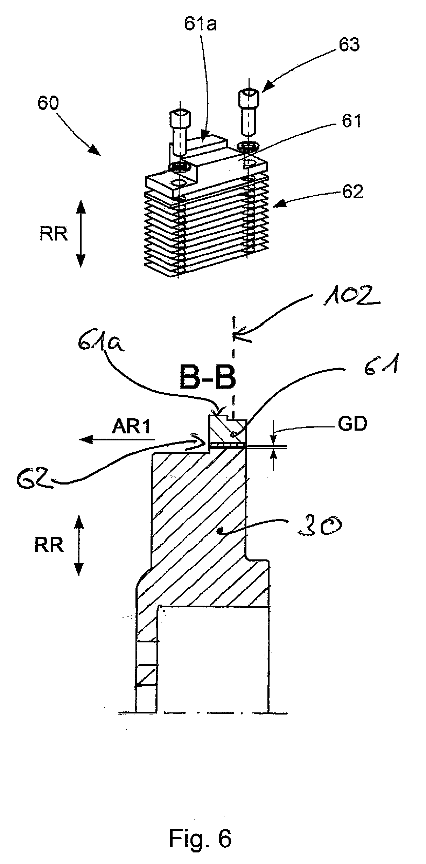

Wie aus Fig.5 und Fig.6 ersichtlich, weist zur Realisierung der Verstellbarkeit jedes Stützelement 60, 70 einen radial außenliegenden Anlagekörper 61, 71 zur Anlage am Innenumfang 12 des Statorgehäuses 11 und eine individuelle Anzahl von dem Anlagekörper 61, 71 nach radial innen unterlegten plattenförmigen Beilagen 62, 72 auf, wobei Anlagekörper 61, 71 und Beilagen 62, 72 mittels Schrauben 63, 73 lösbar am Lagerschild 30 befestigt sind.

Die Stützelemente 60, 70 sind in jeweiligen Ausnehmungen 51 im Lagerschild 30 angeordnet, welche sich jeweils von der Umfangskontur 50 aus radial nach innen sowie umfänglich des Lagerschildes 30 erstrecken, so dass die Schraubenköpfe der Schrauben 63, 73 nicht radial über die Umfangskontur 50 hinaus vorstehen.

Jede Beilage 62, 72 weist eine bestimmte Dickenabmessung in einer Radialrichtung RR auf. In der gezeigten Ausführungsform der Erfindung sind als Nominalbestückung z.B. vier Beilagen 62, 72 mit einer radialen Dickenabmessung von 0,15 mm und sieben Beilagen 62, 72 mit einer radialen Dickenabmessung von 0,20 mm zu einem Stapel mit einer radialen Gesamtdickenabmessung GD von 2 mm aufeinandergestapelt.

Dementsprechend betragen gemäß einer Ausführungsform der Erfindung die anfangs des Justierprozesses noch gleichen Vorstehmaße M jeweils z.B. 4 mm.

Zur Veränderung der jeweiligen Vorstehmaße M (z.B. analog zu den obigen beispielhaften Maßen in einem Bereich von 2 mm bis 6 mm) der Stützelemente 60, 70, so dass bei montiertem Lagerschild 30 das Zentrum des Magnetlagers 80 koinzident mit der geometrischen Längsachse A2 und/oder der magnetischen Längsachse A4 des Stators 10 der elektrischen Maschine 1 ist, sind in einem oder mehreren Justierschritten einfach nur entsprechend aufgenommener Messwerte eine oder mehrere Beilagen 62, 72 zu entfernen bzw. hinzuzufügen. Dabei wird geometrisch ein die Stützelemente 60, 70 umgebender Hüllkreis relativ zur Rotationsachse bzw. des Zentrums des im Lagerschild 30 aufgenommenen Magnetlagers 80 verschoben, so dass bei in das Statorgehäuse 11 eingesetztem Lagerschild 30 die Rotationsachse des Magnetlagers 80 und damit das Zentrum des Magnetlagers 80 zur Erzielung von Koinzidenz relativ zur geometrischen Längsachse A2 und/oder zur magnetischen Längsachse A4 des Stators 10 der elektrischen Maschine 1 verschoben wird.

Die Stützelemente 60, 70 sind in zwei Gruppen von Stützelementen um die Umfangskontur 50 herum verteilt angeordnet. Die Stützelemente einer ersten Gruppe dieser beiden Gruppen sind mit dem Innenumfang 12 des Statorgehäuses 11 im Eingriff, um das Lagerschild 30 gegenüber dem Statorgehäuse 11 einzupassen. Die Stützelemente einer zweiten Gruppe dieser beiden Gruppen sind mit dem Innenumfang 101 eines Anschlussgehäuses 100 im Eingriff, um das Anschlussgehäuse 100 unabhängig vom Lagerschild 30 gegenüber dem Statorgehäuse 11 einzupassen.

Beim Anschlussgehäuse 100 kann es sich um ein Abschlussgehäuse der elektrischen Maschine 1 oder um ein Statorgehäuse einer weiteren Maschine handeln.

Es kann demnach die Längsachse des Anschlussgehäuses 100 bezüglich der Längsachse des Stators 10 der elektrischen Maschine 1 ausgerichtet werden, ohne dass die Koinzidenz des Zentrums des Magnetlagers 80 mit der geometrischen Längsachse A2 des Stators 10 der elektrischen Maschine 1 und/oder der magnetischen Längsachse A4 des Stators 10 der elektrischen Maschine 1 verändert werden muss.

Unter der Annahme, dass in Fig.5 und Fig.6 das Statorgehäuse 11 der elektrischen Maschine 1 rechts und das Anschlussgehäuse 101 links der Trennebene 102 zwischen Statorgehäuse 11 und Anschlussgehäuse 101 positioniert sind, dienen die Stützelemente 70 der Ausrichtung des Lagerschilds 30 zum Statorgehäuse 11 und die Stützelemente 60 der unabhängigen Ausrichtung des Innenumfangs des Anschlussgehäuses 101 zum Statorgehäuse 11.

Die Stützelemente 60, 70 weisen jeweils eine radial außenliegende Stützfläche 61 a, 71 a auf, die axial zum Lagerschild 30 gestuft ausgebildet ist, wobei die Stufung der ersten Gruppe mit mindestens drei Stützelementen 60 in eine erste Axialrichtung AR1 radial bis auf das jeweilige Vorstehmaß M ansteigt und die Stufung der zweiten Gruppe mit mindestens drei Stützelementen 70 in eine zweite Axialrichtung AR2 radial bis auf das jeweilige Vorstehmaß M ansteigt, und wobei innerhalb jeder der beiden Gruppen die Stützelemente 60, 70 mit einem definierten Winkelabstand voneinander um die Umfangskontur 50 herum verteilt angeordnet sind.

In jeder der beiden Gruppen sind die Stützelemente 60, 70 vorzugsweise symmetrisch um die Umfangskontur 50 des Lagerschilds 30 herum verteilt angeordnet.

Im gezeigten Ausführungsbeispiel umfasst jede der beiden Gruppen jeweils vier Stützelemente 60, 70, wobei innerhalb jeder der beiden Vierergruppen die Stützelemente 60, 70 mit einem jeweiligen Winkelabstand von 90 Grad zueinander symmetrisch um die Umfangskontur 50 herum verteilt angeordnet sind.

Im Folgenden werden erfindungsgemäße Verfahrensschritte zum Zusammenbauen der elektrischen Maschine 1 beschrieben.

Zunächst wird in einem ersten erfindungsgemäßen Verfahren das Zentrum bzw. die Rotationsachse A1 jedes Magnetlagers und damit auch das Zentrum jedes Magnetlagers 80 über die Ausrichtung am Innenumfang bzw. Innendurchmesser 12 des Statorgehäuses 11 mit der magnetischen Zentralachse A4 einer Statorwicklung 13 des Stators 10 in erster Näherung adjustiert bzw. koinzident gemacht.

Dies wird gemäß einer Ausführungsform der Erfindung mittels der folgenden nacheinander durchzuführenden Verfahrensschritte realisiert:
Bestimmen der Lage der geometrischen Längsachse A2 des Innenumfangs 12 des Statorgehäuses 11 durch Vermessen (z.B. mittels einer 3D-Koordinatenmessmaschine) des Innenumfangs 12 des Statorgehäuses 11. Einpassen der Außenumfangskontur des Lagerschildes 30 in den Innenumfang 12 des Statorgehäuses 11 im Sinne einer Grobjustierung. Hierzu: Bestimmen der Lage des Zentrums des Magnetlagers 80 relativ zur Lage der geometrischen Längsachse A2 des Innenumfangs 12 des Statorgehäuses 11 durch Vermessen der Lageraufnahme 40 des Lagerschildes 30. Nachfolgendes Bestimmen eines Versatzbetrags des Zentrums des Magnetlagers 80 gegenüber der geometrischen Längsachse A2 des Innenumfangs 12 des Statorgehäuses 11 aus beim Vermessen gewonnenen Messdaten. Demontieren des Lagerschildes 30 vom Statorgehäuse 11 und Verändern der jeweiligen Vorstehmaße M der Stützelemente 60, 70 um den Versatzbetrag.

Optionales weiteres Einpassen der Außenumfangskontur des Lagerschildes 30 in den Innenumfang 12 des Statorgehäuses 11 im Sinne einer Feinjustierung. Hierzu: Bestimmen der Lage des Zentrums des Magnetlagers 80 relativ zur Lage der geometrischen Längsachse A2 des Innenumfangs 12 des Statorgehäuses 11 durch Vermessen der Lageraufnahme 40 des Lagerschildes 30. Dies erfolgt bei aktiven Magnetlagern 80 vorzugsweise über eine Bestimmung des Zentrums des Innendurchmessers des Fanglagers 82. Nachfolgendes Bestimmen eines aktualisierten Versatzbetrags des Zentrums des Magnetlagers 80 gegenüber der geometrischen Längsachse A2 des Innenumfangs 12 des Statorgehäuses 11 aus beim Vermessen gewonnenen Messdaten. Sollte der aktualisierte Versatzbetrag größer als ein tolerierbarer Versatzbetrag sein, sind die Verfahrensschritte beginnend mit dem Demontieren des Lagerschildes 30 zu wiederholen.

Danach kann sich bei Nutzung von aktiven Magnetlagern ein weiteres erfindungsgemäßes Verfahren anschließen, mit dem zusätzlich die Möglichkeit genutzt wird, Justierungen des Rotors 20 zur magnetischen Zentralachse A4 der Statorwicklung 13 des Stators 10 auf Basis eines erzielten Betriebsverhaltens bzw. Schwingungsverhaltens zu realisieren, womit elektrische Asymmetrien korrigiert werden können. Dies wird gemäß einer Ausführungsform der Erfindung zum Beispiel mittels der folgenden Verfahrensschritte realisiert:

Einsetzen des Rotors 20 in das Statorgehäuse 11; Einpassen der Außenumfangskontur des Lagerschildes 30 in den Innenumfang 12 des Statorgehäuses 11, wobei das Magnetlager 80 und der Innenring des Fanglagers 82 die Rotorwelle 21 jeweils umschließen; Betreiben der elektrischen Maschine 1, so dass deren Rotor 20 bei bestromtem Magnetlager 80 rotiert; Bestimmen eines Schwingungsverhaltens des Rotors 20; Bestimmen eines Korrketur-Versatzes gegenüber dem Stator 10 aus dem Schwingungsverhaltens; Demontieren des Lagerschildes 30 vom Statorgehäuse 11; Verändern der jeweiligen Vorstehmaße M der Stützelemente 60, 70 um den Korrketur-Versatz; Einpassen der Außenumfangskontur des Lagerschildes 30 in den Innenumfang 12 des Statorgehäuses 11; Betreiben der elektrischen Maschine 1, so dass deren Rotor 20 bei bestromtem Magnetlager 80 rotiert; Bestimmen eines aktualisierten Schwingungsverhaltens des Rotors 20. Bei noch unzureichendem Schwingungsverhalten Bestimmen eines aktualisierten Korrketur-Versatzes gegenüber dem Stator 10 aus dem aktualisierten Schwingungsverhalten. Sollte der aktualisierte Korrketur-Versatz größer als ein tolerierbarer Korrketur-Versatz sein, sind die Verfahrensschritte beginnend mit dem Demontieren des Lagerschildes 30 zu wiederholen. Das Bestimmen des Korrketur-Versatzes und das entsprechende Verändern der jeweiligen Vorstehmaße M der Stützelemente 60, 70 um den Korrketur-Versatz erfolgen bevorzugt durch Tests bzw. mehrere Montage-und-Mess-Iterationen, bis das gewünschte Schwingungsverhalten erreicht ist. Das Bestimmen des Schwingungsverhaltens erfolgt z.B. mittels einer ähnlich einer Auswuchtbank mit elektronischer Auswerte-und-Anzeigeeinrichtung konfigurierten Prüfeinrichtung.

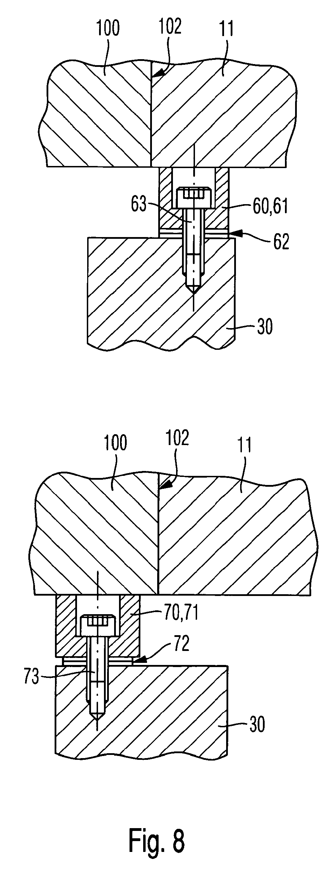

Wie Fig. 8 entnommen werden kann, müssen die Stützelemente 60, 70 im Unterschied zu Fig.5 und Fig.6 keine abgestuften Stützflächen 61 a, 71 a aufweisen. Es ist ausreichend, dass die Stützelemente 60, 70 der beiden Gruppen so ausgeführt sind, dass dieselben jeweils mit einem der Gehäuse, also Stotorgehäuse 11 oder Anschlussgehäuse 100, in Eingriff sind. Auch so kann die Längsachse des Anschlussgehäuses 100 bezüglich der Längsachse des Stators 10 der elektrischen Maschine 1 unabhängig ausgerichtet werden, ohne dass die Koinzidenz des Zentrums des Magnetlagers 80 mit der geometrischen Längsachse A2 des Stators 10 der elektrischen Maschine 1 und/oder der magnetischen Längsachse A4 des Stators 10 der elektrischen Maschine 1 verändert werden muss.

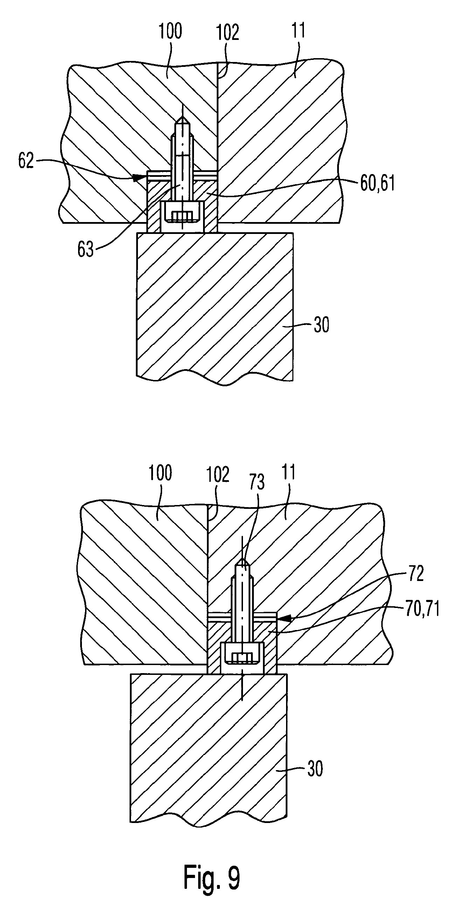

In Fig.1 bis Fig. 8 sind die Stützelemente 60, 70 im Lagerschild 30 aufgenommen. Im Unterscheid hierzu zeigt Fig.9 eine Ausführungsform einer erfindungsgemäßen elektrischen Maschine 1 nach einem zweiten Aspekt der Erfindung, bei welcher die Stützelementen 60, 70 im Statorgehäuse 11 bzw. im Anschlussgehäuse 100 aufgenommen sind und am Lagerschild 30 anliegen, um das Lagerschild 30 unter Erzielung von Koinzidenz des Zentrums des Magnetlagers 80 mit der geometrischen Längsachse A2 der elektrischen Maschine 1 und/oder der magnetischen Längsachse A4 der elektrischen Maschine 1 einzupassen. In der Variante der Fig. 9 sind an einer radial inneren Umfangskontur des Statorgehäuses 11 der elektrischen Maschine 1 und des Anschlussgehäuses 100 eine Anzahl von mindestens drei Stützelementen 60, 70 vorgesehen, die jeweils um ein bestimmtes Vorstehmaß M gegenüber der jeweiligen Umfangskontur nach radial innen vorstehen, so dass sie eine diskontinuierliche Innenumfangskontur des Statorgehäuses 11 und/oder des Anschlussgehäuses 100 definieren. Die jeweiligen Vorstehmaße sind so bemessen, dass das Lagerschild 30 unter Erzielung von Koinzidenz eines Zentrums des Magnetlagers 80 mit einer geometrischen Längsachse A2 der elektrischen Maschine 1 und/oder einer magnetischen Längsachse A4 der elektrischen Maschine 1 einpassbar ist.

Die Stützelemente 60, 70 sind jeweils radial verstellbar an die jeweilige Umfangskontur montiert, so dass die jeweiligen Vorstehmaße M der Stützelemente 60, 70 einstellbar sind. Jedes Stützelement 60, 70 weist vorzugsweise einen radial innenliegenden Anlagekörper 61, 71 zur Anlage an einem Außenumfang des Lagerschilds 30 und eine individuelle Anzahl von dem Anlagekörper 61, 71 radial nach außen unterlegten Beilagen 62, 72 auf, wobei jede Beilage 62, 72 eine bestimmte radiale Dickenabmessung aufweist. Die Stützelemente 60, 70 sind in jeweiligen Ausnehmungen des Statorgehäuses 11 und/oder des Anschlussgehäuses 100 angeordnet, welche sich jeweils von der jeweiligen Umfangskontur aus radial nach außen sowie umfänglich des Statorgehäuses 11 und/oder des Anschlussgehäuses 100 erstrecken.

Die Stützelemente 60, 70 sind vorzugsweise in zwei Gruppen von Stützelementen um die Umfangskontur des Statorgehäuses 11 und/oder des Anschlussgehäuses 100 herum verteilt angeordnet, wobei die Stützelemente einer ersten Gruppe dieser beiden Gruppen das Lagerschild 30 gegenüber dem Statorgehäuse 11 einpassen, und wobei die Stützelemente einer zweiten Gruppe dieser beiden Gruppen das Anschlussgehäuse 100 unabhängig vom Lagerschild 30 gegenüber dem Statorgehäuse 11 einpassen.

Die oben beschriebenen Verfahren sind analog auf die elektrische Maschine der Fig.9 anwendbar. Zur Vermeidung unnötiger Wiederholungen wird bezüglich der Verfahren sowie der Details von passiven oder aktiven Magnetlagern auf die Ausführengen zur elektrische Maschine der Fig. 1 bis Fig. 7, 8 verwiesen.

## Patentansprüche

1. Lagerschild (30) für eine elektrische Maschine (1), aufweisend:
eine Lageraufnahme (40), in der ein zur drehbaren Lagerung eines Rotors (20) der elektrischen Maschine (1) eingerichtetes Magnetlager (80) aufnehmbar ist; und
eine radial äußere Umfangskontur (50), an der eine Anzahl von mindestens drei Stützelementen (60, 70) vorgesehen sind, die jeweils um ein bestimmtes Vorstehmaß (M) gegenüber der Umfangskontur (50) nach radial außen vorstehen, so dass sie eine diskontinuierliche Außenumfangskontur des Lagerschildes (30) definieren;
wobei die jeweiligen Vorstehmaße (M) der Stützelemente (60, 70) so bemessen sind, dass das Lagerschild (30) unter Erzielung von Koinzidenz eines Zentrums des Magnetlagers (80) mit einer geometrischen Längsachse (A2) der elektrischen Maschine (1) und/oder einer magnetischen Längsachse (A4) der elektrischen Maschine (1) einpassbar ist, **dadurch gekennzeichnet, dass** die Stützelemente (60, 70) in zwei Gruppen von Stützelementen um die Umfangskontur (50) herum verteilt angeordnet sind, wobei die Stützelemente einer ersten Gruppe dieser beiden Gruppen mit dem Innenumfang (12) des Statorgehäuses (11) im Eingriff sind, um das Lagerschild (30) gegenüber dem Statorgehäuse (11) einzupassen, und wobei die Stützelemente einer zweiten Gruppe dieser beiden Gruppen mit dem Innenumfang (101) eines Anschlussgehäuses (100) im Eingriff sind, um das Anschlussgehäuse (100) unabhängig vom Lagerschild (30) gegenüber dem Statorgehäuse (11) einzupassen.

2. Lagerschild (30) gemäß Anspruch 1, wobei die Stützelemente (60, 70) jeweils radial verstellbar an die Umfangskontur (50) montiert sind, so dass die jeweiligen Vorstehmaße (M) der Stützelemente (60, 70) veränderbar bzw. einstellbar sind.

3. Lagerschild (30) gemäß Anspruch 1 oder 2, wobei jedes Stützelement (60, 70) einen radial außenliegenden Anlagekörper (61, 71) zur Anlage an einem Innenumfang (12) des Statorgehäuses (11) und eine individuelle Anzahl von dem Anlagekörper (61, 71) radial nach innen unterlegten Beilagen (62, 72) aufweist, wobei jede Beilage (62, 72) eine bestimmte radiale Dickenabmessung aufweist.

4. Lagerschild (30) gemäß einem der Ansprüche 1 bis 3, wobei die Stützelemente (60, 70) in jeweiligen Ausnehmungen (51) angeordnet sind, welche sich jeweils von der Umfangskontur (50) aus radial nach innen sowie umfänglich des Lagerschildes (30) erstrecken.

5. Lagerschild (30) gemäß Anspruch 1 - 4, wobei die Stützelemente (60, 70) jeweils eine radial außenliegende Stützfläche (61 a, 71 a) aufweisen, die axial des Lagerschildes (30) gestuft ausgebildet ist, wobei die Stufung der ersten Gruppe mit mindestens drei Stützelementen (60) in eine erste Axialrichtung (AR1) radial bis auf das jeweilige Vorstehmaß (M) ansteigt und die Stufung der zweiten Gruppe mit mindestens drei Stützelementen (70) in eine zweite Axialrichtung (AR2) radial bis auf das jeweilige Vorstehmaß (M) ansteigt, und wobei innerhalb jeder der beiden Gruppen die Stützelemente (60, 70) mit einem definierten Winkelabstand voneinander um die Umfangskontur (50) herum verteilt angeordnet sind.

6. Lagerschild (30) gemäß Anspruch 5, wobei innerhalb jeder der beiden Gruppen die Stützelemente (60, 70) symmetrisch um die Umfangskontur (50) herum verteilt angeordnet sind.

7. Elektrische Maschine (1) mit:
einem ein Statorgehäuse (11) aufweisenden Stator (10);
einem in einem Innenumfang (12) des Statorgehäuses (11) angeordneten Rotor (20); und
einem Lagerschild (30) gemäß einem der Ansprüche 1 bis 5, wobei das Magnetlager (80) zur drehbaren Lagerung des Rotors (20) in der Lageraufnahme (40) des Lagerschildes (30) aufgenommen ist, und wobei zur radialen Abstützung des Lagerschildes (30) dessen Außenumfangskontur in den Innenumfang (12) des Statorgehäuses (11) derart eingepasst ist, dass das Zentrums des Magnetlagers (80) mit einer geometrischen Längsachse (A2) der elektrischen Maschine (1) und/oder einer magnetischen Längsachse (A4) der elektrischen Maschine (1) einpassbar ist.

8. Elektrische Maschine (1) gemäß Anspruch 7, wobei das Magnetlager (80) als aktives Magnetlager mit einem Fanglager ausgebildet ist, welches einen Innenring aufweist, der die Rotorwelle (21) umschließt und der einen Innendurchmesser hat, welcher um ein vorbestimmtes Maß größer als ein Außendurchmesser der Rotorwelle (21) ist, so dass bei bestromtem Magnetlager (80) ein Ringspalt zwischen Rotorwelle (21) und Innenring des Fanglagers gebildet ist und bei unbestromterm Magnetlager (80) die Rotorwelle (21) innen auf dem Innenring aufliegt.

9. Elektrische Maschine (1) gemäß Anspruch 8, ferner mit einer Steuervorrichtung (90) zum elektrischen Ansteuern des Magnetlagers (80), so dass bei bestromtem Magnetlager (80) eine Rotationsachse der Rotorwelle (21) koinzident mit dem Zentrum (A1) des Magnetlagers ist.

10. Verfahren zum Zusammenbauen einer elektrischen Maschine (1) nach Anspruch 7 - 9, aufweisend:
Einsetzen des Rotors (20) in das Statorgehäuse (11);
Einpassen der Außenumfangskontur des Lagerschildes (30) in den Innenumfang (12) des Statorgehäuses (11), so dass das Magnetlager (80) und der Innenring des Fanglagers die Rotorwelle (21) umschließen;
Betreiben der elektrischen Maschine (1), so dass deren Rotor (20) bei bestromtem Magnetlager (80) rotiert;
Bestimmen eines Schwingungsverhaltens des Rotors (20);
Bestimmen eines Korrketur-Versatzes aus dem Schwingungsverhalten;
Verändern von jeweiligen Vorstehmaße (M) der Stützelemente (60, 70) auf Basis des Korrketur-Versatzes,
wobei die jeweiligen Vorstehmaße (M) der Stützelemente (60, 70) so bemessen sind, dass das Lagerschild (30) unter Erzielung von Koinzidenz eines Zentrums des Magnetlagers (80) mit einer geometrischen Längsachse (A2) der elektrischen Maschine (1) und/oder einer magnetischen Längsachse (A4) der elektrischen Maschine (1) einpassbar ist.

## Claims

1. An end shield (30) for an electric machine (1), comprising:
a bearing mounting (40), in which a magnetic bearing (80) that is equipped for the rotatable mounting of a rotor (20) of the electric machine (1) can be mounted; and
a radially outer circumferential contour (50), on which a number of at least three support elements (60, 70) is provided, which in each case radially project to the outside by a certain projection dimension (M) with respect to the circumferential contour (50) so that they define a discontinuous outer circumferential contour of the end shield (30) ;
wherein the respective projection dimensions (M) of the support elements (60, 70) are dimensioned so that the end shield (30) can be fitted in subject to achieving a coincidence of a centre of the magnetic bearing (80) with a geometrical longitudinal axis (A2) of the electric machine (1) and/or a magnetic longitudinal axis (A4) of the electric machine (1), **characterized in that** the support elements (60, 70) are arranged in two groups of support elements distributed about the circumferential contour (50), wherein the support elements of a first group of these two groups are in engagement with the inner circumference (12) of the stator housing (11) in order to fit in the end shield (30) with respect to the stator housing (11), and wherein the support elements of a second group of these two groups are in engagement with the inner circumference (101) of a connecting housing (100) in order to fit in the connection housing (100) independently of the end shield (30) with respect to the stator housing (11).

2. The end shield (30) according to claim 1, wherein the support elements (60, 70) in each case are radially adjustably mounted to the circumferential contour (50) so that the respective projection dimensions (M) of the support elements (60, 70) are variable or adjustable.

3. The end shield (30) according to claim 1 or 2, wherein each support element (60, 70) comprises a contact body (61, 71) located radially outside for lying against an inner circumference (12) of the stator housing (11) and an individual number of shims (62, 72) shimmed radially to the inside under the contact body (61, 72), wherein each shim (62, 72) has a certain radial thickness dimension.

4. The end shield (30) according to any one of the claims 1 to 3, wherein the support elements (60, 70) are arranged in respective recesses (51) which in each case extend from the circumferential contour (50) radially to the inside and circumferentially of the end shield (30).

5. The end shield (30) according to claims 1 - 4, wherein the support elements (60, 70) in each case have a support surface (61a, 71a) located radially outside, which axially of the end shield (30) are designed stepped, wherein the stepping of the first group with at least three support elements (60) rises in a first axial direction (AR1) up to the respective projection dimension (M) and the stepping of the second group with at least three support elements (70) radially rises in a second axial direction (AR2) up to the respective projection dimension (M), and wherein within each of the two groups the support elements (60, 70) are arranged with a defined angular distance from one another distributed about the circumferential contour (50).

6. The end shield (30) according to claim 5, wherein within each of the two groups the support elements (60, 70) are arranged symmetrically distributed about the circumferential contour (50).

7. The electric machine (1) with:
a stator (10) comprising a stator housing (11);
a rotor (20) arranged in an inner circumference (12) of the stator housing (11); and
an end shield (30) according to any one of the claims 1 to 5, wherein the magnetic bearing (80) for the rotatable mounting of the rotor (20) is received in the bearing mounting (40) of the end shield (30), and wherein for radially supporting the end shield (30) the outer circumferential contour of the same is fitted into the inner circumference (12) of the stator housing (11) in such a manner that the centre of the magnetic bearing (80) can be fitted in with a geometrical longitudinal axis (A2) of the electric machine (1) and/or a magnetic longitudinal axis (A4) of the electric machine (1).

8. An electric machine (1) according to claim 7, wherein the magnetic bearing (80) is designed as active magnetic bearing with a catch bearing, which comprises an inner ring, which encloses the rotor shaft (21) and which has an inner diameter which is larger by a predetermined dimension than an outer diameter of the rotor shaft (21) so that with energised magnetic bearing (80) an annular gap between rotor shaft (21) and inner ring of the catch bearing is formed and with non-energised magnetic bearing (80) the rotor shaft (21) lies on the inner ring on the inside.

9. The electric machine (1) according to claim 8, further with a control device (90) for electrically activating the magnetic bearing (80) so that with energised magnetic bearing (80) an axis of rotation of the rotor shaft (21) coincides with the centre (A1) of the magnetic bearing.

10. A method for assembling an electric machine (1) according to claims 7 - 9, comprising:
inserting the rotor (20) in the stator housing (11) ;
fitting the outer circumferential contour of the end shield (30) into the inner circumference (12) of the stator housing (11), so that the magnetic bearing (80) and the inner ring of the catch bearing enclose the rotor shaft (21);
operating the electric machine (1) so that its rotor (20) with energised magnetic bearing (80) rotates;
determining a vibration behaviour of the rotor (20) ;
determining a correction offset from the vibration behaviour;
changing respective projection dimensions (M) of the support elements (60, 70) based on the correction offset,
wherein the respective projection dimensions (M) of the support elements (60, 70) are dimensioned so that the end shield (30) can be fitted in subject to achieving coincidence of a centre of the magnetic bearing (80) with a geometrical longitudinal axis (A2) of the electric machine (1) and/or a magnetic longitudinal axis (A4) of the electric machine (1).

## Revendications

1. Flasque (30) pour une machine électrique (1), présentant :
un logement de palier (40), dans lequel un palier magnétique (80) conçu pour le positionnement rotatif d'un rotor (20) de la machine électrique (1) peut être renfermé ; et
un contour circonférentiel extérieur radial (50), sur lequel une pluralité d'au moins trois éléments d'appui (60, 70) sont prévus, qui dépassent radialement vers l'extérieur d'une épaisseur d'embase (M) déterminée par rapport au contour circonférentiel (50), de sorte qu'ils définissent un contour circonférentiel extérieur discontinu du flasque (30) ;
dans lequel l'épaisseur d'embase (M) respective des éléments d'appui (60, 70) est dimensionnée de telle sorte que le flasque (30) puisse être ajusté en obtenant une coïncidence d'un centre du palier magnétique (80) avec un axe longitudinal géométrique (A2) de la machine électrique (1) et/ou d'un axe longitudinal magnétique (A4) de la machine électrique (1), **caractérisé en ce que** les éléments d'appui (60, 70) sont disposés en deux groupes d'éléments d'appui étant répartis autour du contour circonférentiel (50), dans lequel les éléments d'appui d'un premier groupe de ces deux groupes vient en prise avec la circonférence intérieure (12) du logement de stator (11), afin d'ajuster le flasque (30) par rapport au logement de stator (11), et dans lequel les éléments d'appui d'un deuxième groupe de ces deux groupes vient en prise avec la circonférence intérieure (101) d'un boitier de raccordement (100), afin d'ajuster le boitier de raccordement (100) indépendamment du flasque (30) par rapport au logement de stator (11).

2. Flasque (30) selon la revendication 1, dans lequel les éléments d'appui (60, 70) sont montés de manière respectivement réglable radialement sur le contour circonférentiel (50), de sorte que l'épaisseur d'embase (M) respective des éléments d'appui (60, 70) puisse être modifiée, respectivement réglée.

3. Flasque (30) selon la revendication 1 ou 2, dans lequel chaque élément d'appui (60, 70) présente un corps de positionnement (61, 71) situé à l'extérieur radialement pour le positionnement sur une circonférence intérieure (12) du logement de stator (11) et une pluralité individuelle de garnitures (62, 72) posées au-dessous radialement vers l'intérieur du corps de positionnement (61, 71), dans lequel chaque garniture (62, 72) présente une dimension d'épaisseur radiale déterminée.

4. Flasque (30) selon une des revendications 1 à 3, dans lequel les éléments d'appui (60, 70) sont disposés dans des évidements (51) respectifs, qui s'étendent respectivement à partir du contour circonférentiel (50) radialement vers l'intérieur ainsi que sur la circonférence du flasque (30).

5. Flasque (30) selon les revendications 1 - 4, dans lequel les éléments d'appui (60, 70) présentent respectivement une surface d'appui (61a, 71a) située radialement à l'extérieur, qui sont conçus en gradins axialement au flasque (30), dans lequel l'étagement du premier groupe avec au moins trois éléments d'appui (60) augmente dans une première direction axiale (AR1) radialement jusqu'à l'épaisseur d'embase respective (M) et l'étagement du deuxième groupe avec au moins trois éléments d'appui (70) augmente dans une deuxième direction axiale (AR2) radialement jusqu'à l'épaisseur d'embase respective (M), et dans lequel à l'intérieur de chacun des deux groupes les éléments d'appui (60, 70) sont disposés en étant répartis avec une distance angulaire définie les uns des autres autour du contour circonférentiel (50).

6. Flasque (30) selon la revendication 5, dans lequel à l'intérieur de chacun des deux groupes les éléments d'appui (60, 70) sont disposés en étant répartis symétriquement autour du contour circonférentiel (50).

7. Machine électrique (1) comportant :
un stator (10) présentant un logement de stator (11) ;
un rotor (20) disposé dans une circonférence intérieur (12) du logement de stator (11) ;
un flasque (30) selon une des revendications 1 à 5, dans laquelle le palier magnétique (80) pour le positionnement rotatif du rotor (20) est positionné dans le logement de palier (40) du flasque (30), et dans laquelle pour l'appui radial du flasque (30) dont le contour circonférentiel extérieur est adapté à la circonférence intérieure (12) du logement de stator (11) de telle sorte que le centre du palier magnétique (80) puisse être ajusté avec un axe longitudinal géométrique (A2) de la machine électrique (1) et/ou un axe longitudinal magnétique (A4) de la machine électrique (1).

8. Machine électrique (1) selon la revendication 7, dans laquelle le palier magnétique (80) est conçue comme un palier magnétique actif avec un palier amortisseur qui présente une bague intérieure, qui entoure l'arbre de rotor (21) et qui a un diamètre intérieur, qui est plus grand d'une proportion prédéterminée qu'un diamètre extérieur de l'arbre de rotor (21), de sorte que lorsque le palier magnétique (80) est alimenté électriquement, un interstice annuaire entre l'arbre de rotor (21) et la bague intérieure du palier amortisseur est formé et lorsque le palier magnétique (80) n'est pas alimenté électriquement, l'arbre de rotor (21) vient reposer à l'intérieur sur la bague intérieure.

9. Machine électrique (1) selon la revendication 8, comportant en outre un dispositif de commande (90) pour piloter électriquement le palier magnétique (80), de sorte que lorsque le palier magnétique (80) est alimenté électriquement, un axe de rotation de l'arbre de rotor (21) coïncide avec le centre (A1) du palier magnétique.

10. Procédé d'assemblage d'une machine électrique (1) selon les revendications 7 - 9, présentant :
la pose du rotor (20) dans le logement de stator (11) ;
l'ajustement du contour circonférentiel extérieur du flasque (30) à la circonférence intérieure (12) du logement de stator (11), de sorte que le palier magnétique (80) et la bague intérieure du palier amortisseur entourent l'arbre de rotor (21) ;
la mise en fonctionnement de la machine électrique (1), de sorte que son rotor (20) soit mis en rotation lorsque le palier magnétique (80) est alimenté électriquement ;
la détermination d'un comportement d'oscillation du rotor (20) ;
la détermination d'un déport de correction d'après le comportement d'oscillation ;
la modification de l'épaisseur d'embase (M) respective des éléments d'appui (60, 70) sur la base du déport de correction,
dans lequel l'épaisseur d'embase respective (M) des éléments d'appui (60, 70) sont dimensionnés de telle sorte que le flasque (30) puisse être ajusté en obtenant une coïncidence d'un centre du palier magnétique (80) avec un axe longitudinal géométrique (A2) de la machine électrique (1) et/ou d'un axe longitudinal magnétique (A4) de la machine électrique (1).
